# EUROPEAN PATENT SPECIFICATION

(11) **EP 1 759 969 B1**
(45) Date of publication and mention of the grant of the patent: **03.09.2008**
(21) Application number: 06014075.3
(22) Date of filing: 06.07.2006
(51) Int. Cl.: B62J 17/02, B62J 17/04

(54) **Windshield system for a small-sized vehicle**
Windschutzanordnung für ein Kleinfahrzeug
Dispositif coupe-vent pour un petit véhicule

(30) Priority: 31.08.2005 JP 2005252835
(43) Date of publication of application: 07.03.2007
(73) Proprietor: HONDA MOTOR CO., LTD., Tokyo 107-8556 (JP)
(72) Inventor: Ueda, Yukiya, Wako-shi Saitama 351-0193 (JP); Sugita, Haruomi, Wako-shi Saitama 351-0193 (JP); Kurakawa, Yukinori, Wako-shi Saitama 351-0193 (JP); Ozawa, Hiroyuki, Wako-shi Saitama 351-0193 (JP); Okubo, Takefumi, Wako-shi Saitama 351-0193 (JP)
(74) Representative: Rupp, Christian

(56) References cited:
- AU-A- 8 412 282
- DE-A1- 19 520 515
- GB-A- 2 115 356
- JP-A- 10 203 454
- JP-A- 2002 284 073

## Description

The present invention relates to a windshield system for a small-sized vehicle.

As for a conventional type windshield system of a small-sized vehicle, the one where air outlets are provided to both sides of an upper end of a windshield, outside airstream is blown from these air outlets and the effect of the windshield is enhanced, further, an outside air inlet and an air outlet are provided on the right and on the left of the windshield and a difference in pressure between the inside and the outside of the windshield is reduced by blowing air taken from the outside air inlet from the air outlet is known.

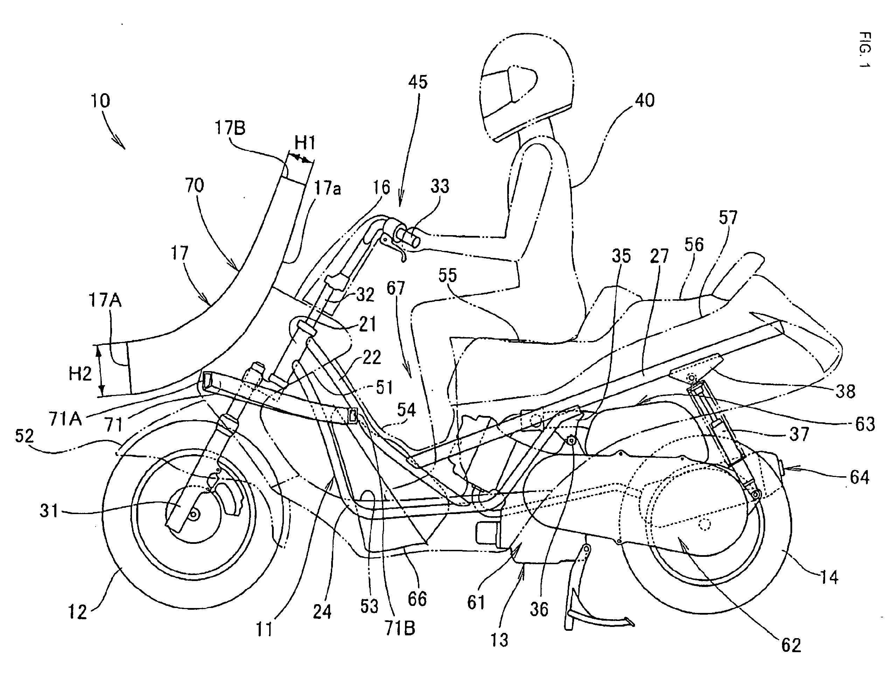

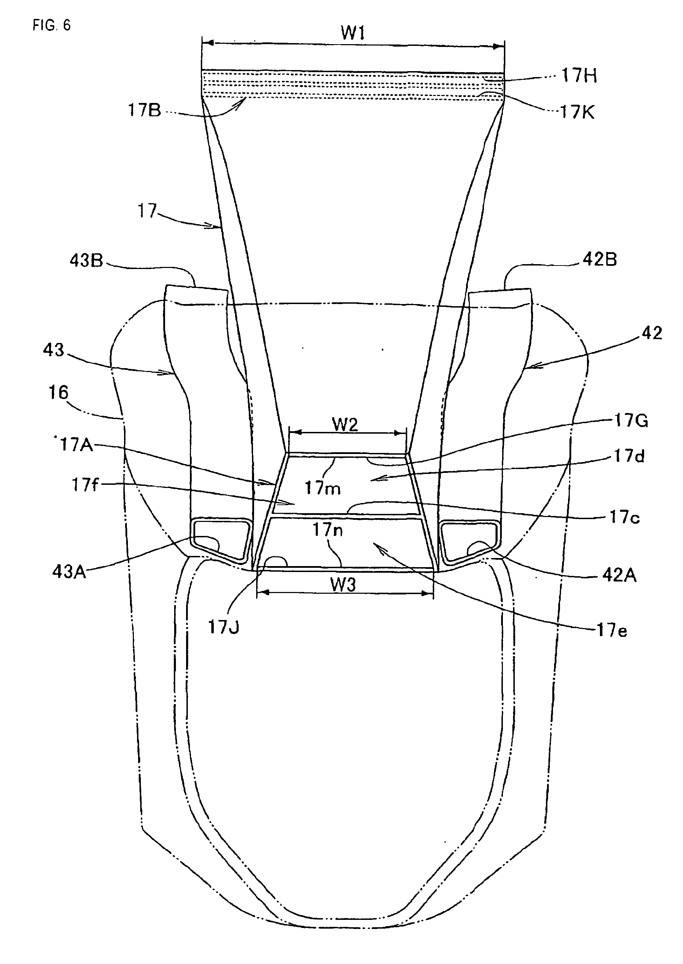

Referring to Figs. 1 to 4 of JP64-001671A, it is described that the effect of a windshield upon each upper half of an occupant is enhanced by: providing the windshield 2 to the front of a motorcycle 1; providing a transparent screen 22 to an upper part of the windshield 2; holding the screen 22 with an outside frame 213; providing right and left outside air inlets 216, 216 in a lower part of the outside frame 213; communicating these outside air inlets 216, 216 with air outlets 217, 217 provided to an upper part of the outside frame 213 through air ducts 215, 215; and blowing out outside airstream taken from the outside wind inlets 216, 216 from the air outlets 217, 217. Referring to Figs. 9 to 12, it is described that an opening 501 is provided between a windshield 502 and a fender 500, outside airstream W50 is taken inside the windshield 502 utilizing the opening 501, the outside airstream W50 is led inside the windshield 502 via guides 521, 531, 541, 532, 551 and a difference in pressure between the outside and the inside of the windshield 502 is reduced. fas outside airstream W2 is blown out from the air outlets 217, 217 provided on the right and on the left of the upper part of the outside frame 213 as shown in Fig. 1 and the outside airstream W2 is not blown out from the upside of the screen 22, traveling airstream passing the upside of the screen 22 directly hits a rider and the effect of the windshield is not sufficient. Besides, the air outlet 317 shown in Fig. 6 is opened outside the body, the air outlet shown in Figs. 10 and 12 leads airstream inside the windshield 502, and is provided to reduce a difference in pressure between the outside and the inside of the windshield so as to reduce running resistance.

However, as a result of recent analysis, in case structure where air is blown from a windshield to acquire the effect of a screen is adopted, it is known that the reduction of a difference in pressure only in the vicinity of the windshield is not sufficient from viewpoints of not only the reduction of running resistance but the reduction of noise about a rider's ears particularly in a large-sized low slung type vehicle in which a space in front of the rider and around the rider is large.

JP2002-284073 discloses a scooter type vehicle which is provided with a leg shield, a wind screen, and a meter panel on a front part of a vehicle body. An inlet port is provided on a front surface of the vehicle body and exhaust ports are provided in a periphery of the meter panel.

AU8412282A reveals a wind deflector having an air channeling means for directing a stream of air towards a portion of the trailing edge of the wind deflector, to cause air flowing over the portion of the trailing edge to be displaced away from said trailing edge by said stream of air, said channeling means having air accelerating means for accelerating said stream of air towards the portion of the trailing edge. Wind that normally is experienced by the rider when looking over the fairing can thus be directed upwardly and over the rider's head.

Document AV8412282A discloses a windshield system for a shall-sized vehicle according to the preamble of claim 1.
GB2115356A discloses a ventilator for a two-or three-wheeled vehicle. An air inlet is formed in a front panel of the vehicle and air outlets are formed in the leg shield. The inlet and the outlet are communicating via an air passage. The vehicle further comprises a rear air inlet for engine cooling formed in a front surface of a rear body of the vehicle as well as a rear outlet formed in a rear surface thereof.

The object of the invention is to enhance the effect of a windshield and to sufficiently adjust pressure in an open space at the back of the windshield.

### [Means for Solving the Problem]

In accordance with the present invention there is provided a windshield system for a small-sized vehicle as set out in claim 1.

Air is taken from the air inlet provided to the front of the windshield into the duct, the air is blown from the air outlet opened upward in the upper center of the windshield, a direction of traveling airstream flowing from the front side of the body toward an occupant on the upside of the windshield is changed substantially upward, and the traveling airstream that hits the occupant is reduced.
Besides, as the air outlet for adjusting pressure in the space around the rider by blowing air toward the back of the occupant in the small-sized vehicle such as a low slung type motorcycle or three-wheeled vehicle is provided, pressure in a space at the back of the occupant which is turned in a low-pressure state by the windshield and the occupant is adjusted by directing the air outlet for adjusting pressure and blowing air toward the space at the back of the occupant. Hence, the noise about the rider's ears can be reduced.

The invention disclosed in Claim 2 relates to a small-sized vehicle having a windshield system according to Claim 1 wherein the vehicle further comprises a leg shield in front of a rider's legs and a step space at the back of the leg shield.

The invention disclosed in Claim 3 is characterized in that an additional outlet for adjusting pressure in a space around the rider by blowing out air toward the step space is provided separately from the air outlet. As the air outlet for adjusting pressure in the space around the rider by blowing air toward the step space in the small-sized vehicle such as a low slung type motorcycle or three-wheeled vehicle is provided, a difference in pressure between the relatively large space in front of the rider and the outside of the windshield can be rectified and noise about the rider's ears can be reduced.
The invention disclosed in Claim 4 is characterized in that the additional outlet for adjusting pressure is provided at the back of the leg shield.
The pressure adjusting air outlet for blowing air toward step space can be efficiently provided by providing the air outlet for adjusting pressure at the back of the leg shield and blowing air toward the space around an occupant's legs.

The invention disclosed in Claim 5 is characterized in that the outlet for adjusting pressure in a space around the rider by blowing air toward the space at the back of the occupant is provided separately from the additional outlet for adjusting pressure.
Pressure in a space at the back of the occupant which is turned in a low-pressure state by the windshield and the occupant is adjusted by directing the air outlet for adjusting pressure and blowing air into the space at the back of the occupant.

According to the invention disclosed in Claim 1, as the air outlet is opened to the upper center of the windshield and the air outlet for adjusting pressure in the space around the rider by blowing air toward the back of the occupant is provided separately from the air outlet, air is taken from the air inlet provided to the front of the windshield into the duct, the air is blown from the air outlet opened upward in the upper center of the windshield, a direction of traveling airstream flowing from the front side of the body toward the occupant on the upside of the windshield is changed substantially upward, and traveling airstream that hits the occupant is reduced.
Besides, as the air outlet for adjusting pressure in the space around the rider by blowing air toward the back of the occupant in the small-sized vehicle such as a low slung type motorcycle or three-wheeled vehicle is provided, pressure in a space at the back of the occupant which is turned in a low-pressure state by the windshield and the occupant is adjusted by directing the air outlet for adjusting pressure and blowing air toward the space at the back of the occupant. Hence, the noise about the rider's ears can be reduced.

According to the invention disclosed in Claim 2, a small sized vehicle such as a low slung type motorcycle or three-wheeled vehicle having a leg shield in front of a rider's legs and a step space at the back of the leg shield can be provided with a windshield system according to Claim 1.

According to the invention disclosed in Claim 3, as an additional outlet for adjusting pressure in the space around the rider by blowing out air toward the step space is provided, a difference in pressure between the relatively large space in front of the rider and the outside of the windshield can be rectified and noise about the rider's ears can be reduced.
According to the invention disclosed in Claim 4, as the air outlet for adjusting pressure is provided at the back of the leg shield, the air outlet for adjusting pressure by blowing air toward the step space can be efficiently provided by providing the air outlet for adjusting pressure at the back of the leg shield and blowing air toward the space around the occupant's legs.

According to the invention disclosed in Claim 5, as the outlet for adjusting pressure in the space around the rider by blowing air toward the space at the back of the occupant is provided separately from the additional outlet for adjusting pressure, pressure turned in a low-pressure state by the windshield and the occupant in the space at the back of the occupant can be adjusted by directing the air outlet for adjusting pressure toward the back of the occupant and blowing air toward the space at the back of the occupant.
[Fig. 1] is a side view showing a small-sized vehicle provided with a windshield system (a first embodiment).
[Fig. 2] shows the action of the windshield system (the first embodiment).
[Fig. 3] is a side view showing a windshield system (a second embodiment).
[Fig. 4] is a side view showing a windshield system (a third embodiment) according to the invention.
[Fig. 5] is a side view showing a windshield system (a fourth embodiment).
[Fig. 6] is a front view showing a small-sized vehicle (the fourth embodiment) .
[Fig. 7] is a plan showing the small-sized vehicle (the fourth embodiment).
[Fig. 8] is a side view showing a windshield system (a fifth embodiment) according to the invention.

Referring to the attached drawings, best embodiments of the invention will be described below. The drawings shall be viewed in a direction of reference numerals.
Fig. 1 is a side view showing a small-sized vehicle provided with a windshield system (a first embodiment). The small-sized vehicle 10 is a scooter-type motorcycle where a front wheel 12 is suspended from the front of a body frame 11 so that the front wheel can be steered, a power unit 13 is attached to the center of the body frame 11 in a vertically swingable manner, a rear wheel 14 is attached to the rear end of the power unit 13 and a windshield 17 is attached to the front of a front cover 16 provided to the front of the body.

The body frame 11 includes: a head pipe 21 provided to its front end; a pair of left and right front upper frames 22, 23 (only the reference numeral 22 on this side is shown) extended backward and diagonally downward from the head pipe 21; a pair of left and right front lower frames 24, 25 (only the reference numeral 24 on this side is shown) in a substantial U-shape in a side view; and a pair of left and right rear frames 27, 28 (only the reference numeral 27 on this side is shown) which are extended backward and diagonally upward from halfway parts of the front upper frames 22, 23 and respective intermediate parts of which are coupled to rear ends of the front lower frames 24, 25.

The head pipe 21 supports a front fork 31 so that the front fork can be steered, the front wheel 12 is attached to a lower end of the front fork 31, and handlebars 33 are attached to an upper end of a steering shaft 32 of the front fork 31.

Each rear frame 27, 28 is a member to a lower part in the substantial center of which each unit supporting bracket 35 is attached and the power unit 13 is swingably attached to the left and right unit supporting brackets 35, 35 (only the reference numeral 35 on this side is shown) via a spindle 36. A reference numeral 37 denotes a rear cushion unit attached between the rear end of the power unit 13 and a bracket 38 on the side of the rear frame 27.

The windshield 17 is a substantially J-type transparent duct in the side view provided to the front of the front cover 16. While the small-sized vehicle 10 is driven, air is taken inside from an air inlet 17A provided to a front end of the windshield 17, air is blown substantially upward from an air outlet 17B provided to an upper end of the windshield 17, and thereby a course of traveling airstream toward a rider 40 from the front side of the vehicle is changed upward by air to be blown to reduce traveling airstream that hits an upper half of the rider 40, that is, reduce air pressure.

A pair of left and right ducts 71, 72 (only the reference numeral 71 on this side is shown) for adjusting pressure are provided to the front cover 16 at the back of the windshield 17.
The ducts 71, 72 for adjusting pressure are provided with air inlets 71A, 72A (only the reference numeral 71A on this side is shown) in the front of the front cover 16, and are provided with air outlets 71B, 72B (only the reference numeral 71B on this side is shown) in an upper part of a center cover 54 at the back of a leg shield 51.
The windshield 17 and the ducts 71, 72 for adjusting pressure form the windshield system 70.

In case the windshield 17 is provided to the vehicle, air pressure onto the rider 40 is reduced and wind noise is reduced while the vehicle is driven, however, pressure in a space 45 at the back of the windshield 17 decreases, compared with its vicinity and noise about the rider's ears caused by a vortex by traveling airstream increases. As the ducts 71, 72 for adjusting pressure are provided together with the windshield 17, pressure in the space 45 is increased by supplying air to the space 45 turned at lower pressure than pressure in the vicinity by the windshield 17 at the back of the leg shield 51, particularly to a step space 67 forming the space 45 and its vicinity by the ducts 71, 72 for adjusting pressure, a difference in pressure between the rear side of the windshield 17 and its vicinity is reduced, and the noise about the rider's ears is reduced.

The reference numeral 51 in Fig. 1 denotes the leg shield provided at the back of the front cover 16 and in front of legs (detailedly, parts under knees) of the rider 40, 52 denotes a front fender, 53 denotes a step floor (53) for the rider 40 to put his/her feet, 54 denotes the center cover, 55 denotes a rider's seat, 56 denotes a pillion seat, 57 denotes a body cover, 61 and 62 denote an engine and a continuously variable transmission respectively forming the power unit 13, 63 denotes an intake system connected to an upper part of the engine 61, 64 denotes an exhaust system connected to a lower part of the engine 61, 66 denotes a fuel tank, and 67 denotes the step space encircled by the leg shield 51, the center cover 54 and the rider's seat 55.

Next, the action of the windshield system 70 will be described.

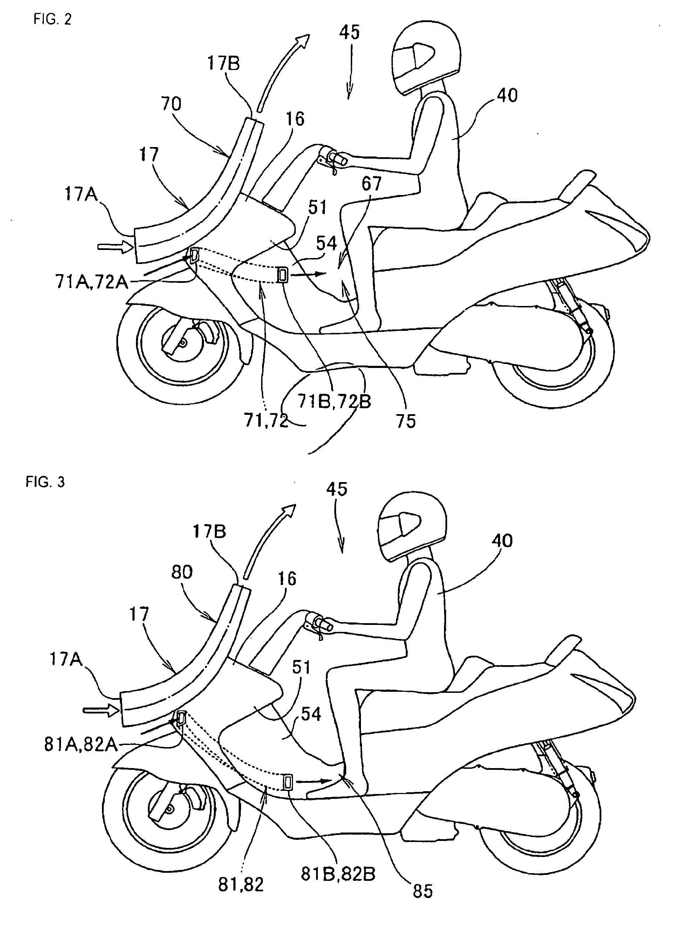

Fig. 2 shows the action of the windshield system (the first embodiment).
While the small-sized vehicle is driven, air pressure which the rider 40 receives is reduced by the windshield 17, in addition, pressure in the space 45 at the back of the windshield 17, detailedly pressure in a space 75 in front of the legs (detailedly the parts under the knees) of the rider forming the downside of the space 45 is increased from a low-pressure state by taking air from the inlets 71A, 72A of the ducts 71, 72 for adjusting pressure as shown by an arrow and blowing the air from the air outlets 71B, 72B, the difference in pressure with the vicinity is reduced, a swirl of air into the space 75 is inhibited, and the noise about the ears of the rider 40 is reduced.

Fig. 3 is a side view showing a windshield system (a second embodiment).
The windshield system 80 of a small-sized vehicle includes a windshield 17 and a pair of left and right ducts 81, 82 for adjusting pressure.

The ducts 81, 82 for adjusting pressure are provided with air inlets 81A, 82A in the front of a front cover 16 and are provided with air outlets 81B, 82B in a lower part of a center cover 54 at the back of a leg shield 51.

While the small-sized vehicle is driven, air pressure which a rider 40 receives is reduced by the windshield 17, in addition, pressure in a space 45 at the back of the windshield 17, detailedly pressure in a space 85 at the rider's feet forming the downside of the space 45 is increased from a low-pressure state by taking air from the inlets 81A, 82A of the ducts 81, 82 for adjusting pressure as shown by an arrow and blowing the air from the outlets 81B, 82B, a difference in pressure with its vicinity is reduced, a swirl of air into the space 85 is inhibited, and noise about ears of the rider 40 is reduced.

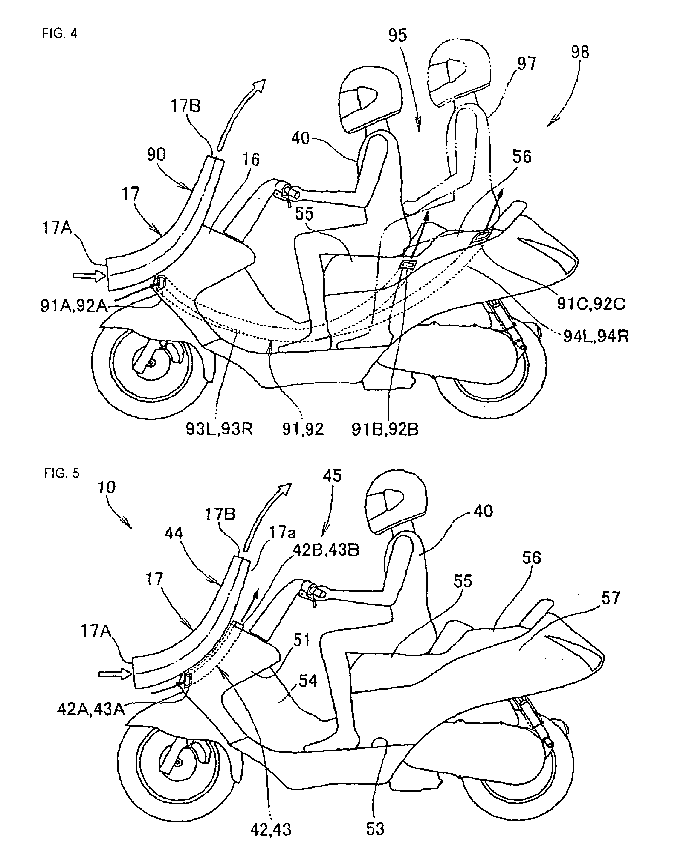

Fig. 4 is a side view showing a windshield system (a third embodiment) according to the invention.
The windshield system 90 of a small-sized vehicle includes a windshield 17 and a pair of left and right ducts 91, 92 for adjusting pressure.

The duct 91 for adjusting pressure includes a left main duct 93L and a left subduct 94L connected to a middle of the left main duct 93L, the left main duct 93L is provided with an air inlet 91A in the front of a front cover 16 and is provided with an air outlet 91B on the rear side of the rider's seat 55, and the left subduct 94L is provided with an air outlet 91 C on the rear side of a pillion seat 56.

Though the following are not shown in Fig. 4, like the duct 91 for adjusting pressure, the duct 92 for adjusting pressure includes a right main duct 93R and a right and right subduct 94R connected to a middle of the right main duct 93R, the right main duct 93R is provided with an air inlet 92A in the front of the front cover 16 and is provided with an air outlet 92B on the rear side of the rider's seat 55, and the right subduct 94R is provided with an air outlet 92C on the rear side of the pillion seat 56.

While the small-sized vehicle is driven, air pressure which a rider 40 receives is reduced by the windshield 17, in addition, pressure in space 95 at the back of the rider 40 is increased from a low-pressure state by taking air from the inlets 91A, 92A of the ducts 91, 92 for adjusting pressure as shown by an arrow and blowing the air from the outlets 91 B, 92B, a difference in pressure with its vicinity is reduced, a swirl of air into the space 95 is inhibited, and noise about ears of the rider 40 is reduced.

In case a pillion passenger 97 rides, a blowing of air from the outlets 91B, 92B is stopped, instead, air is blown from the outlets 91C, 92C, pressure in a space 98 at the back of the pillion passenger 97 is increased from a low-pressure state, a difference in pressure with its vicinity is reduced, a swirl of air into the space 98 is inhibited, and noise about ears of the rider 40 and the pillion passenger 97 is reduced.

Fig. 5 is a side view showing a windshield system (a fourth embodiment).
The windshield system 44 of a small-sized vehicle includes a windshield 17 and a pair of left and right ducts 42, 43 for adjusting pressure.
The ducts 42, 43 for adjusting pressure are formed in shapes substantially along a back 17a of the windshield 17, are provided with air inlets 42A, 43A at the front ends, and are provided with air outlets 42B, 43B at upper ends.

While the small-sized vehicle 10 is driven, air pressure which a rider 40 receives is reduced: by taking air in the windshield 17 from an air inlet 17A provided to the windshield 17 of the windshield system 44 as shown by an arrow the inside of which is void; and by blowing the air substantially upward from an air outlet 17B.

Further, pressure in the space 45 at the back of the windshield 17 is increased from a low-pressure state by taking air from the inlets 42A, 43A of the ducts 42, 43 for adjusting pressure as shown by an arrow and blowing the air from the outlets 42B, 43B, a difference in pressure with its vicinity is reduced, a swirl of air into the space 45 is inhibited, and noise about ears of the rider 40 is reduced.

Fig. 6 is a front view showing the small-sized vehicle (the fourth embodiment) and the windshield 17 shows that an upper duct 17d and a lower duct 17e are formed by forming the air inlet 17A in a shape of a trapezoid and providing a partition 17c in the vertical substantial center.
The upper duct 17d and the lower duct 17e form a duct part 17f.

The upper duct 17d is provided with an upper inlet 17G at its front end and is provided with an upper outlet 17H at its upper end, the lower duct 17e is provided with a lower inlet 17J at its front end and is provided with a lower outlet 17K at its upper end.
The upper inlet 17G and the lower inlet 17J form the air inlet 17A, and the upper outlet 17H and the lower outlet 17K form the air outlet 17B.

The width W1 of the air outlet 17B is larger than the width W2 of an upper side 17m and the width W3 of a lower side 17n for example of the air inlet 17A, the height H1 (see Fig. 1) of the air outlet 17B is smaller than the height H2 (see Fig. 1) of the air inlet 17A, and the cross-sectional area of the air outlet 17B is smaller than the cross-sectional area of the air inlet 17A.

Therefore, the flow velocity of air taken in the air inlet 17A is increased in the windshield 17 and can be blown from the air outlet 17B, further, air can be blown in a wide range by flattening the air outlet 17B, and windshield effect can be enhanced.

The inlets 42A, 43A of the ducts 42, 43 for adjusting pressure are substantially quadrangular openings located at the substantially same height outside the lower inlet 17J of the windshield 17.

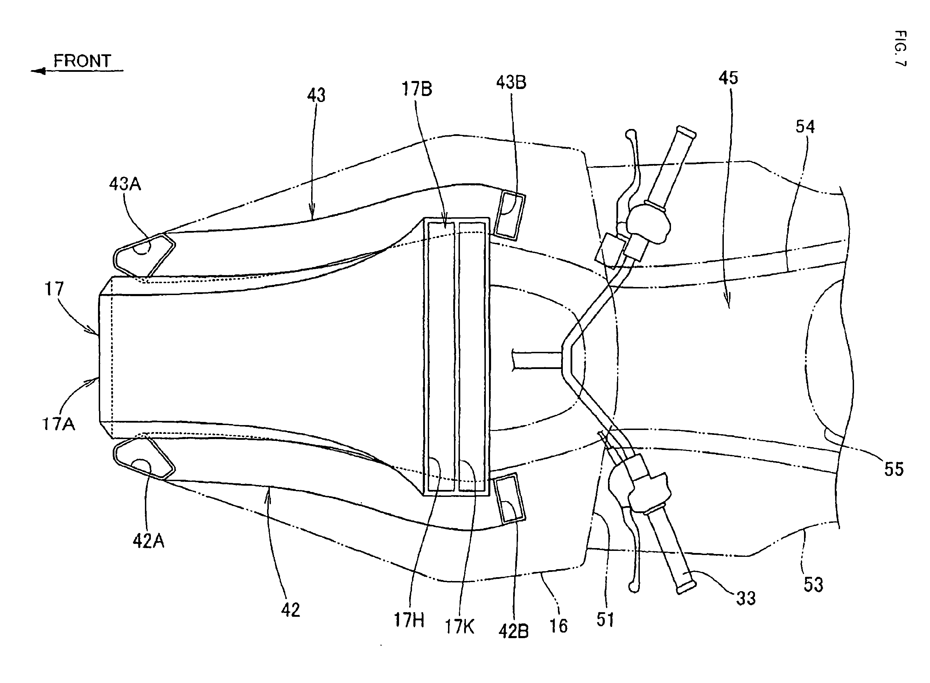

Fig. 7 is a plan showing the small-sized vehicle (the fourth embodiment, an arrow FRONT in Fig. 7 shows the front side of the vehicle). The ducts 42, 43 for adjusting pressure are substantially linearly extended backward in the vehicle from the sides of the inlets 42A, 43A to the sides of the outlets 42B, 43B, are directed inside the body in each vicinity of the outlets 42B, 43B, and blow air inside the body. Therefore, pressure in the space 45 (open space in which the occupant rides) at the back of the windshield 17 can be effectively adjusted.

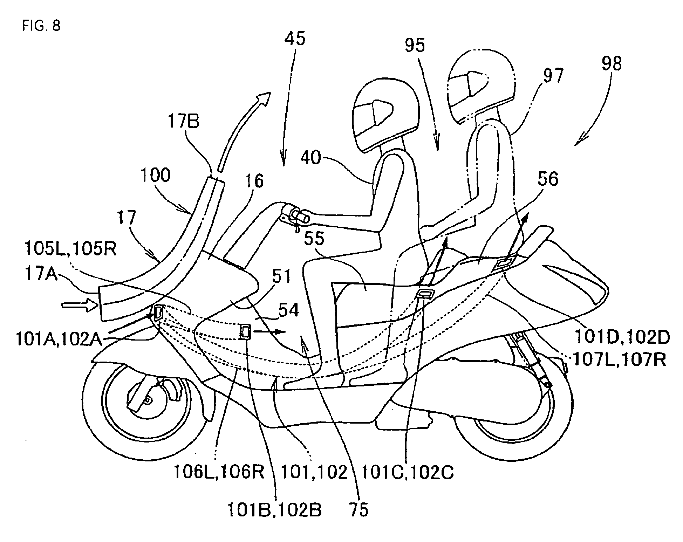

Fig. 8 is a side view showing a windshield system (a fifth embodiment) according to the invention.
The windshield system 100 of a small-sized vehicle includes a windshield 17 and a pair of left and right ducts 101, 102 for adjusting pressure.

The duct 101 for adjusting pressure includes: a left first duct 105L having an air inlet 101 A provided to the front of a front cover 16 and an air outlet 101B provided to an upper part of a center cover 54 at the back of a leg shield 51; a left second duct 106L having the air inlet 101A provided to the front of the front cover 16 and an air outlet 101C provided to the rear side of a rider's seat 55; and a left third duct 107L one end of which is connected to an intermediate part of the left second duct 106L and which is provided with an air outlet 101D on the rear side of a pillion seat 56.

The duct 102 for adjusting pressure includes: a right first duct 105R having an air inlet 102A provided to the front of the front cover 16 and an air outlet 102B provided to the upper part of the center cover 54 at the back of the leg shield 51; a right second duct 106R having the air inlet 102A provided to the front of the front cover 16 and an air outlet 102C provided to the rear side of the rider's seat 55; and a right third duct 107R one end of which is connected to an intermediate part of the right second duct 106R and which is provided with an air outlet 102D on the rear side of the pillion seat 56.

While the small-sized vehicle is driven, air pressure which a rider 40 receives is reduced by the windshield 17, in addition, pressure in the space 45 at the back of the windshield 17, detailedly pressure in the space 75 in front of legs of the rider (detailedly, parts under his/her knees) forming the downside of the space 45 at the back of the leg shield 51 is increased from a low-pressure state by taking air from the inlets 101A, 102A of the ducts 101, 102 for adjusting pressure as shown by an arrow and blowing the air from the outlets 101B, 102B, a difference in pressure with its vicinity is reduced, a swirl of air into the space 75 is inhibited, and noise about ears of the rider 40 is reduced.

Besides, while the small-sized vehicle is driven, air pressure which the rider 40 receives is reduced by the windshield 17, in addition, pressure in the space 95 at the back of the rider 40 is increased from a low-pressure state by taking air from the inlets 101A, 102A of the ducts 101, 102 for adjusting pressure as shown by the arrow and blowing the air from the outlets 101 C, 102C, a difference in pressure with its vicinity is reduced, a swirl of air into the space 95 is inhibited, and noise about the ears of the rider 40 is reduced.

In case a pillion passenger 97 rides, the blowing of air from the outlets 101C, 102C is stopped, instead, air is blown from the outlets 101D, 102D, pressure in the space 98 at the back of the pillion passenger 97 is increased from a low-pressure state, a difference in pressure with its vicinity is reduced, a swirl of air into the space 98 is inhibited, and noise about ears of the rider 40 and the pillion passenger 97 is reduced.

As described in relation to Figs. 1 and 2, the windshield system 70 of the small-sized vehicle 10 such as a low slung type motorcycle or three-wheeled vehicle where the windshield 17 of the small-sized vehicle 10 such as a low slung type motorcycle or three-wheeled vehicle having the leg shield 51 in front of legs of the rider 40 and having the step space 67 at the back of the leg shield 51 is provided with the air outlet 17B opened to the upside and the air outlet 17B and the air inlet 17A provided to the front of the vehicle are communicate with each other through a duct 17f, and the air outlet 17B is opened to the upper center of the windshield 17, and the outlets 71 B, 72B for adjusting pressure in the space 45 around the rider 40 by blowing air toward the step space 67 are provided separately from the air outlet 17B.

Air is taken in the duct 17f from the air inlet 17A provided to the front of the windshield 17, the air is blown from the air outlet 17B opened to the upside in the upper center of the windshield 17, a direction of traveling airstream flowing from the front side of the body toward the rider 40 as an occupant on the upside of the windshield 17 is changed substantially upward, and traveling airstream that hits the rider 40 is reduced.
Besides, as air is blown toward the step space 67 of the small-sized vehicle 10 such as a low slung type motorcycle or three-wheeled vehicle and the outlets 7 1 B, 72B for adjusting pressure for adjusting pressure in the space 45 around the rider 40 are provided, a difference in pressure between the relatively large space 45 in front of the rider 40 and the outside of the windshield 17 can be rectified and noise about the rider's ears can be reduced.

The outlets 71B, 72B for adjusting pressure are provided at the back of the leg shield 51.
The outlets 71B, 72B for adjusting pressure are provided at the back of the leg shield 51 and the pressure adjusting outlets 71B, 72B for blowing air toward the step space 67 by blowing air toward the space 45 around the rider's legs can be efficiently provided.

As shown in Fig. 4, the air outlet 17B is opened to the upper center of the windshield 17 and the pressure adjusting outlets 91B, 92B, 91C, 92C for adjusting pressure in the spaces 95, 98 around the occupant by blowing air toward the back of the occupant (rider 40, pillion passenger 97) are provided separately from the air outlet 17B.
Pressure turned in a low-pressure state by the windshield 17 and the occupant in the spaces 95, 98 at the back of the occupant can be adjusted by directing the outlets 91B, 92B, 91C, 92C for adjusting pressure at the back of the occupant and blowing air toward the spaces 95, 98 at the back of the occupant.

As shown in Figs. 1, 2 and 8, the second pressure adjusting outlets 101C, 102C, 101D, 102D for adjusting pressure in the spaces 95, 98 around the occupant by blowing air toward the spaces 95, 98 at the backs of the occupant are provided separately from the outlets 101B, 102B for adjusting pressure.
Pressure turned in a low-pressure state by the windshield 17 and the occupant in the space at the back of the occupant can be adjusted by directing the second outlets 101C, 102C, 101D, 102D for adjusting pressure toward the back of the occupant, and by blowing air toward the space at the back of the occupant.

In these embodiments, as shown in Fig. 1, each cross-sectional area of the air inlet 17A and the air outlet 17B of the windshield 17 is fixed, however, the invention is not limited to this and the cross-sectional area of at least either of the air inlet 17A or the air outlet 17B may be also variable according to the vehicle speed of the small-sized vehicle for example. Besides, as shown in Fig. 8, the outlet for adjusting pressure in the first embodiment and the outlets for adjusting pressure in the third embodiment may be also combined. In this case, pressure can be adjusted in respective spaces and effect can be produced by reducing noise about the rider's ears. In addition, a plurality of the outlets for adjusting pressure in the first to fifth embodiments may be also combined. [Industrial Applicability]

The windshield system according to the invention is suitable for a small-sized vehicle.
10... Small-sized vehicle,
17...Windshield,
17f...Duct (Duct part),
17A...Air inlet,
17B...Air outlet,
40, 97...Occupant (Rider, Pillion passenger)
42B, 43B, 91B, 91C, 92B, 92C, 101B, 101C, 102B, 102C...Outlet for adjusting pressure (Outlet),
44, 70, 80, 90...Windshield system,
45...Open space (Space at back of windshield),
51...Leg shield,
53...Floor (Step floor),
55, 56...Occupant's seat (Rider's seat, Pillion passenger's seat)
67... Step space,
95, 98... Space at back of occupant

## Claims

1. A windshield system (44, 70, 80, 90) for a small-sized vehicle (10) the windshield system includes a windshield (17) which is provided with an air inlet (17A) and an air outlet (17B),
said air outlet (17B) and said air inlet (17A) are adapted to be provided to the front of the vehicle **charactenzed in that** said air outlet (17B) and said air inlet (17A) are communicated with each other through a duct (17f), wherein:
the air outlet (17B) is opened to the upper and center section of the windshield (17), and
an outlet for adjusting pressure (91B, 91C, 92B, 92C, 101C, 101D, 102C, 102D) in a space around a rider by blowing out air toward the back of an occupant (40,97) is provided separately from the air outlet (17B).

2. A small-sized vehicle having a windshield system (44, 70, 80, 90) according to Claim 1; the vehicle further having a leg shield (51) in front of rider's legs and a step space (67) at the back of the leg shield (51).

3. The small-sized vehicle according to Claim 2, wherein:
an additional outlet for adjusting pressure (42B, 43B, 71B, 72B, 81B, 82B, 101B, 102B) in a space around the rider by blowing out air toward the step space (67) is provided separately from the air outlet (17B).

4. The small-sized vehicle according to Claim 3, wherein:
the additional outlet for adjusting pressure (42B, 43B, 71B, 72B, 81B, 82B, 101B, 102B) is provided at the back of the leg shield (51).

5. The small-sized vehicle according to anyone of claims 3 or 4, wherein:
the outlet for adjusting pressure (91B, 91C, 92B, 92C, 101C, 10 1 D, 102C, 102D) in a space around the rider by blowing out air toward a space at the back of the occupant (40,97) is provided separately from the additional outlet for adjusting. pressure (42B, 43B, 71 B, 72B, 81B, 82B, 101B, 102B).

## Patentansprüche

1. Windschutzanordung (44, 70, 80, 90) für ein Kleinfahrzeug (10), wobei die Windschutzanordung einen Windschutz (17) enthält, der mit einem Lufteintritt (17A) und einem Luftaustritt (17B) versehen ist,
wobei der Luftaustritt (17B) und der Lufteintritt (17A) ausgebildet sind, um an der Vorderseite des Fahrzeugs vorgesehen zu sein,
**dadurch gekennzeichnet,**
**dass** der Luftaustritt (17B) und der Lufteintritt (17A) miteinander durch einen Kanal (17f) verbunden sind, wobei:
der Luftaustritt (17B) zum oberen Bereich und Mittenbereich des Windschutzes (17) geöffnet ist,
und
ein Austritt zur Druckregulierung (91B, 91C, 92B, 92C, 101C, 101D, 102C, 102D) in einem Raum um einen Fahrer getrennt von dem Luftaustritt (17B) vorgesehen ist, wobei Luft in Richtung des Rückens eines Insassens (40, 97) ausgeblasen wird.

2. Kleinfahrzeug mit einer Windschutzanordnung (44, 70, 80, 90) gemäß Anspruch 1, wobei das Fahrzeug weiterhin einen Beinschutz (51) vor den Beinen des Fahrers und einen Fußraum (67) an der Rückseite des Beinschutzes (51) aufweist.

3. Kleinfahrzeug gemäß Anspruch 2, wobei:
ein zusätzlicher Austritt zur Druckregulierung (42B, 43B, 71B, 72B, 81B, 82B, 101B, 102B) in einem Raum um den Fahrer getrennt von dem Luftaustritt (17B) vorgesehen ist, wobei Luft in Richtung des Fußraums (67) ausgeblasen wird.

4. Kleinfahrzeug gemäß Anspruch 3, wobei:
der zusätzliche Austritt zur Druckregulierung (42B, 43B, 71 B, 72B, 81 B, 82B, 101B, 102B) an der Rückseite des Beinschutzes (51) vorgesehen ist.

5. Kleinfahrzeug gemäß einem der Ansprüche 3 oder 4, wobei:
der Austritt zur Druckregulierung (91B, 91C, 92B, 92C, 101C, 101D, 102C, 102D) in einem Raum um einen Fahrer getrennt von dem zusätzlichen Luftaustritt zur Druckregulierung (42B, 43B, 71 B, 72B, 81 B, 82B, 101B, 102B) vorgesehen ist, wobei Luft in Richtung des Rückens des Insassens (40, 97) ausgeblasen wird.

## Revendications

1. Système de pare-brise (44, 70, 80, 90) pour un véhicule de petite taille (10), le système de pare-brise comportant un pare-brise (17) qui est pourvu d'une entrée d'air (17A) et d'une sortie d'air (17B),
ladite sortie d'air (17B) et ladite entrée d'air (17A) étant adaptées pour être prévues à l'avant du véhicule, **caractérisé en ce que** ladite sortie d'air (17B) et ladite entrée d'air (17A) communiquent l'une avec l'autre par un conduit (17f), dans lequel :
la sortie d'air (17B) est ouverte sur les sections supérieure et centrale du pare-brise (17), et
une sortie destinée à régler la pression (91B, 91C, 92B, 92C, 101C, 101D, 102C, 102D) dans un espace autour d'un conducteur en soufflant de l'air en direction du dos d'un occupant (40, 97) est prévue séparément de la sortie d'air (17B).

2. Véhicule de petite taille présentant un système de pare-brise (44, 70, 80, 90) selon la revendication 1, le véhicule présentant en outre un protège-jambes (51) devant les jambes du conducteur et un espace étagé (67) à l'arrière du protège-jambes (51).

3. Véhicule de petite taille selon la revendication 2, dans lequel :
une sortie additionnelle destinée à régler la pression (42B, 43B, 71B, 72B, 81B, 82B, 101B, 102B) dans un espace autour du conducteur en soufflant de l'air en direction de l'espace étagé (67) est prévue séparément de la sortie d'air (17B).

4. Véhicule de petite taille selon la revendication 3, dans lequel :
la sortie additionnelle destinée à régler la pression (42B, 43B, 71B, 72B, 81B, 82B, 101B, 102B) est prévue à l'arrière du protège-jambes (51).

5. Véhicule de petite taille selon l'une quelconque des revendications 3 ou 4, dans lequel :
la sortie destinée à régler la pression (91B, 91C, 92B, 92C, 101C, 101D, 102C, 102D) dans un espace autour du conducteur en soufflant de l'air en direction d'un espace à l'arrière de l'occupant (40, 97) est prévue séparément de la sortie additionnelle destinée à régler la pression (42B, 43B, 71B, 72B, 81B, 82B, 101B, 102B).
